# EUROPEAN PATENT SPECIFICATION

(11) **EP 2 440 798 B1**
(45) Date of publication and mention of the grant of the patent: **30.11.2016**
(21) Application number: 10724111.9
(22) Date of filing: 28.05.2010
(51) Int. Cl.: F16B 47/00

(54) **A SUCTION FIXING**
SAUGBEFESTIGUNG
FIXATION PAR ASPIRATION

(30) Priority: 08.06.2009 GB 0909791
(43) Date of publication of application: 18.04.2012
(73) Proprietor: BB IPR Limited, Middlesex HA7 4XR (GB)
(72) Inventor: TOLLMAN, Stephen, Paul, Hertfordshire AL9 6DL (GB)
(74) Representative: Dolleymores
(86) International application number: PCT/GB2010/050898
(87) International publication number: WO 2010/142975

(56) References cited:
- EP-A1- 1 770 285
- WO-A1-2007/117130
- DE-U1-202007 002 224
- US-A1- 2006 284 043

## Description

The present invention relates to a suction fixing comprising a bowl or cup and a base unit, wherein the base unit is arranged to be attached to a substantially flat air-impervious surface such that the bowl or cup may be secured to a tabletop.

A particularly simple type of suction fixing comprises a one piece moulded suction pad or cup in the form of concave disc, with an attachment portion moulded on to a rear face thereof, by which it is connected to an article to be attached to a surface. The suction pad is secured to the flat surface by being pressed into place, whereby air is expelled from the concaved portion and the resilient nature of the material, normally rubber or a soft plastic, then subsequently acts to adopt its original concave shape, maintaining a partial vacuum under the pad which retains the pad in place.

The above type of suction fixing is inexpensive to produce, but does not provide a particularly stable mounting. Any item attached to it is connected to a single point of contact at the centre of the suction pad, which point of contact is separated by an air gap from the surface and is thus only in contact with the surface by means of the flexible peripheral skirt portion of the suction pad.

WO 2007/117130 disclose a modified fixing of this general type, where a semi-rigid skirt is placed over the suction pad to stabilise the mounting and to increase the suction effect by using the resilience of the skirt.

An alternative type of suction fixing, which is also relatively inexpensive, is found on the bottom of some plastic mixing bowls and children's bowls. This comprises an annular ring, or downwardly protruding annular wall, moulded on the bottom of the bowl, with a soft rubber seal on a lower edge thereof. With this arrangement, the resilient properties of the bowl, or the resilient properties of the sealing material, can be used to create a small vacuum under the bowl by first pressing the bowl into contact with a surface. However, the partial vacuum created under the bowl is relatively low and this type of fixing is more useful in preventing the bowl from sliding than in preventing the bowl being removed from a surface.

A third type of common suction fixing employs a suction pad with a cam mechanism attached thereto and arranged to emphasise the concave nature of the surface of the suction pad. Such a suction fixing is placed on a flat surface and the cam mechanism operated to increase the concave shape below the suction pad and thus establish a strong vacuum under the suction pad. This type of fixing has the advantage that the materials of the suction pad can be relatively thick which, together with the relatively large partial vacuum created under the section pad, can create a relatively stable mounting. Such suction fixings can be used to mount a mirror to car windscreens for example, where a relatively stable fixing is required. US Patent 2006/285428 discloses such a fixing for retaining a mixing bowl in place on a work surface. This type of fixing has a number of component parts which have to be assembled and therefore is relatively expensive to produce and is not as easy to clean as the two previously described types of fixing.

Further examples of this type of fixing are disclosed in DE 20 2007 002 224 U1, EP 1 770 285 and US 2006/0284043. US 2006/028043 discloses a suction fixing in accordance with the pre-characterising portion of Claim 1.

It is an object of the present invention to provide an improved suction fixing.

According to the present invention, there is provided a suction fixing comprising an utensil in the form of a bowl or cup and a base unit arranged to be fixed to a surface and to releasably engage with the utensil to fix the utensil in place on the surface, the base unit comprising: a suction pad; an actuation mechanism to distort the suction pad to increase the volume between the suction pad and any surface on which it is placed and to also subsequently release the suction under the pad; a housing attached to the suction pad; and an engagement means on the housing arranged to releasably engage with the utensil to be fixed to the surface by the base unit, wherein: the utensil is arranged to be free standing in an upright position on a horizontal surface when separated from the base unit with the bowl or cup facing away from the surface; the utensil has engagement means arranged to cooperate with the engagement means on the housing; the actuation mechanism on the base unit can be operated to fix the base unit to a surface prior to the utensil being attached to the base unit; the actuation mechanism comprises and is operated by a lever mounted on the top of the base unit; the utensil is arranged to cover the top of the base unit when attached to the base unit; and the utensil locks the actuation mechanism by preventing access to the lever preventing the actuation mechanism from being operated to release the base unit from the surface until the utensil has been removed from the base unit; and wherein when the base unit is fixed to a flat horizontal surface and the utensil is mounted on the base unit by the engagement means the utensil is in an upright position.

A suction fixing in accordance with the present invention enables a base unit to be securely fixed to a surface by means of the suction pad of the base unit and the base unit to be locked in place. In this way the base unit can be securely fixed without the fixing process being hindered by the presence of the utensil which is to be fixed to the surface.

Furthermore, the utensil can then be fixed and released from the suction fixing without disturbing the suction fixing. Also a number of different utensils may be fixed by a single type of base unit and they may be detached from the base unit for cleaning.

The invention may be of particular advantage for use with young children or the disabled. The base unit can be secured firmly in place on a table and food placed in a freestanding bowl or cup at a first location, before being transferred and secured to the base unit. The base unit, being locked in place, can then not be removed from the table so the bowl or cup is unlikely to be displaced by a small child playing or a person, who for example may only have use of one hand, trying to cut something in the bowl. However a supervisor may easily release the bowl or cup for washing and replace it with a subsequent bowl or cup.

Advantageously, the actuator mechanism comprises a cam lever mounted on the top of the housing which is connected to a central region of the suction pad, the housing is arranged to contact an outer peripheral region of the suction pad and a cam surface on the cam lever acts against the housing to cause the central region of the suction pad to be raised relative to a surface on which the fixing is placed whilst the outer peripheral region is retained in place by the housing. Thus a suction can be created between the suction pad and a surface on which the fixing is placed to fix the base unit to the surface by simple operation of the cam lever.

The above arrangement provides a particularly stable base unit because the outer rigid wall of the housing tightly sandwiches the peripheral region of the suction pad to the table.

Preferably, the cam lever is arranged to be rotated from a raised position to a lowered position where it is substantially flush with the top surface of the base unit when the base unit is fixed to a surface. In this way, the base unit may be particularly compact with substantially flush outer surfaces.

The base unit may be circular wherein the fixing further comprises an utensil having a downwardly protruding annular wall arranged to fit over an outer wall of the base unit. Preferably the engagement means on the base unit then engage with the said annular wall of the utensil. In this manner, the base unit may be substantially concealed within the annular wall of the utensil which may be desirable for aesthetic reasons. Furthermore, a close fit may be provided between the annular wall and the base unit providing a particularly rigid fixing for the utensil.

Engagement means on the base unit may be outwardly biased pins arranged to engage with the apertures in the annular wall, which pins are depressed in order to release the utensil. Alternatively, the engagement means on the base unit may be keys or keyslots arranged to engage with corresponding keyslots or keys on the annular wall of the utensil, when the utensil is rotated in a first direction relative to the base unit. This enables the base unit to first be attached to a surface and then an utensil to be subsequently attached to the base unit by being twisted onto the base unit and released by being twisted off the base unit. Preferably, the keyslots are shaped to initially resist rotation of the utensil to release it from the base unit such that when the utensil is installed on the base unit it is locked in position.

The fixing may comprise an utensil which in use has one or more correct rotational orientations and wherein the base unit is marked so that it may be correctly fixed to a surface, to ensure that when the utensil is subsequently attached to the base unit the utensil has the correct orientation.

Various embodiments of the present invention will now be described, by way of example, with reference to the accompanying drawings, in which like reference numerals are used throughout to indicate like parts and of which:
Figure 1 is perspective view of a base unit of a suction fixing in accordance with the present invention, with a cam lever shown in a raised position;
Figure 2 is a perspective view of the fixing of Figure 1, with the cam lever shown in a lowered position;
Figure 3 shows selected components of the suction fixings of Figures 1 and 2;
Figure 4 shows the components of Figure 3 assembled;
Figure 5 shows the housing of the Figure 1 and 2 embodiments;
Figure 6 is a cross section through the assembled components of the suction fixing illustrated in Figures 1 to 5;
Figure 7 is a perspective of a bowl for use with the base unit of Figure 1; and
Figure 8 is a side elevation of the bowl of Figure 7 mounted on the base unit depicted in Figures 1 to 6.

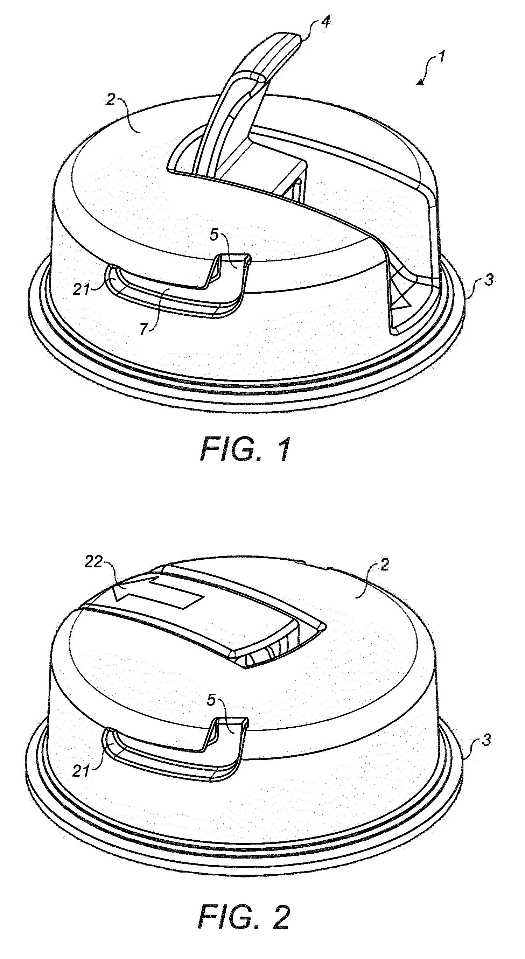

Referring to Figure 1, a base unit 1 of a suction fixing in accordance with the present invention comprises a housing 2, suction pad 3 and a cam lever 4, shown in a raised position. The housing 2 has key slots 5 moulded on opposite sides thereof, only one of which can be seen in Figure 1.

Figure 2, a perspective view of the base unit 1 showing the opposite side to that of Figure 1 and with the cam lever 4 in a lowered position. The cam lever 4 has an alignment arrow 22 on its upper surface.

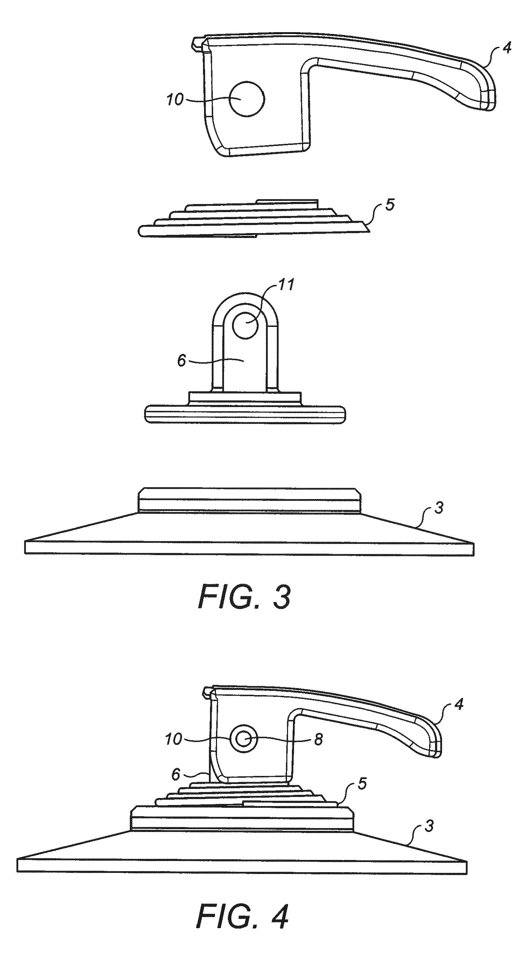

Figures 3 to 6 show the components of an actuator assembly of the base unit 1. These comprise the cam lever 4, coil compression spring 5, rigid plastic shaft 6 and rubber suction pad 3.

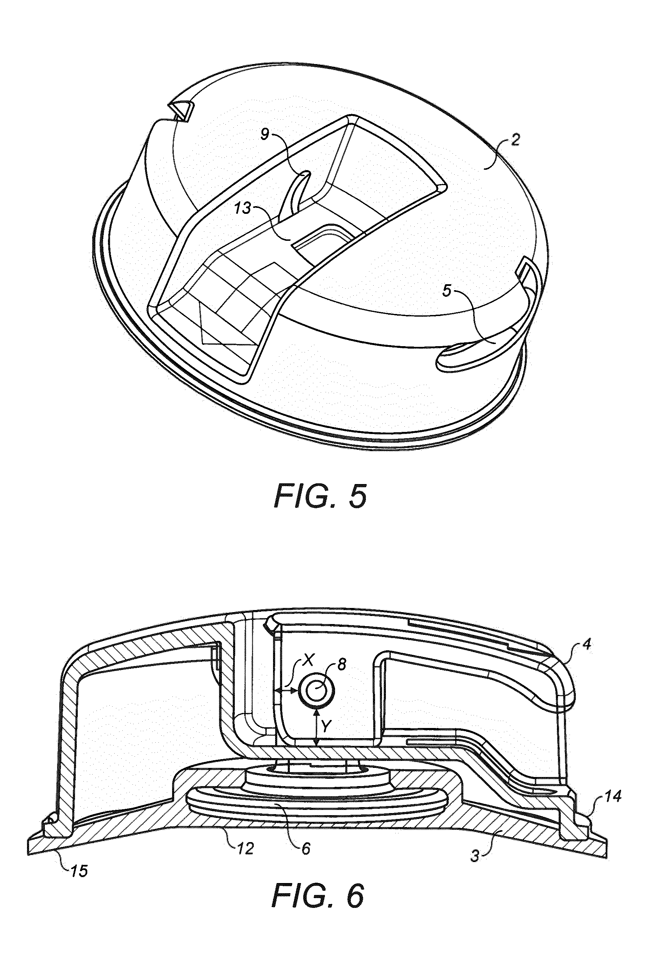

These are assembled in the housing 2, illustrated in Figure 5. The assembled components are shown in figure 4, but with the housing 2 omitted for clarity. The shaft 6 is inserted through: the base of the pad 3; the spring 5; the housing 2 (not shown); and the cam lever 4. The spring 5 is retained in a compressed state with the assembled components retained in place by a pin 8 (see Figure 4) inserted through a cut out 9 in the housing 2 (see Figure 5).

The assembled components, including the housing 2, are shown in cross section in Figure 6. Here the distance labelled "Y" is seen to be greater than the distance labelled "X" due to the profile of the cam surface of the cam lever 4. Therefore, when the cam lever 4 is raised, as shown in Figure 1, a central region of the suction pad 3 is at its lowest position and when the cam lever 4 is closed, as illustrated in Figures 2 and 6, the cam action of the cam lever against surface 13 (see Figure 5) of housing 2 acts on the shaft 6 to raise the central region 12 of the suction pad 3. The cam lever 4 is biased towards either of the positions shown by the action of the spring 5.

With the cam lever 4 in the position shown in figures 2 and 6 the outer peripheral edge 14 of the housing 2 applies downward pressure to outer peripheral region 15 of the suction pad 3, forcing it to adopt an attenuated concave shape as the central region 12 is raised. If the base unit 1 is placed on a smooth, air-impervious, surface and the cam lever 4 lowered, attenuation of the concave shape of the lower surface of the suction pad 3 increases the volume of the cavity below the suction pad 3, causing the base unit 1 to be affixed to the surface by suction.

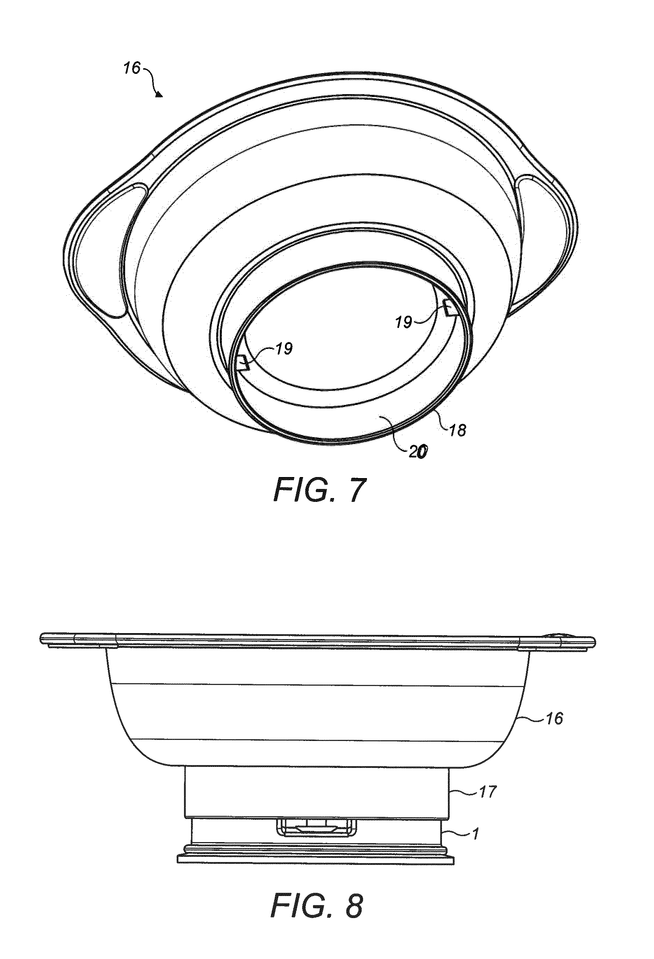

When the base unit 1 of Figures 1 to 6 has been attached to a surface, a bowl 16, as illustrated in Figures 7 and 8 or other similar shaped utensil, may be attached to the base unit 1. The bowl 16 has a lower annular rim 17 with keys 19 extending inwardly from an inner surface 20 thereof. The bowl is orientated such that the keys 19 are aligned with the key slots 5 of the base unit 1, whereupon the bowl is lowered and rotated such that the keys 19 engage with the key slots 5. As shown in Figure 1, the key slots 5 have a lower central portion 7. Rotation of the bowl in a first direction locates the keys 19 at the ends 21 of the key slots 5. When it is desired to release the bowl 16, the bowl 16 is rotated in the opposite direction with sufficient force to force the keys 19 past the lower central portion 7 of the key slots 5. Alternatively the key slots 5 may have two separate lower portions such that on rotation to release the bowl 16, the bowl 16 is first partially released by passing the first protrusions on the key slots 5 to a mid position on the key slots 5, with continued rotation past the second protrusion of each key slot 5 being required to release the bowl completely.

Referring to Figure 8, the bowl 16 is shown mounted on the base unit 1. When mounted on the base unit 1, the bowl 16 is only a few millimetres higher than when directly stood on the surface. Also with reference to Figure 8, it is seen that the base unit 1 is substantially housed within the lower annular rim 17 of the bowl 16. This prevents the base unit 1 being released by the bowl 16 locking the cam lever 4 in the position shown in Figure 2.

The base unit 1, seen in Figure 2, has an arrow 22 marked on it. This may be used to correctly orientate the base unit, for example to point at a user if the base unit is to be used to mount a bowl, so that when the bowl or other item is mounted on it, it is correctly aligned.

An embodiment of the present invention has been described above by way of example and the skilled person will appreciate that any number of alternative embodiments may be possible within the scope of the appended claims.

## Claims

1. A suction fixing comprising an utensil (16) in the form of a bowl or cup and a base unit (1) arranged to be fixed to a surface and to releasably engage with the utensil (44) to fix the utensil in place on the surface, the base unit comprising:
a suction pad (3);
an actuation mechanism (4) to distort the suction pad to increase the volume between the suction pad and any surface on which it is placed and to also subsequently release the suction under the pad;
a housing (24) attached to the suction pad; and
an engagement means (45) on the housing arranged to releasably engage with the utensil to be fixed to the surface by the base unit,
wherein:
the utensil is arranged to be free standing in an upright position on a horizontal surface when separated from the base unit with the bowl or cup facing away from the surface;
the utensil has engagement means arranged to cooperate with the engagement means on the housing;
the actuation mechanism on the base unit can be operated to fix the base unit to a surface prior to the utensil being attached to the base unit; and
the utensil is arranged to cover the top of the base unit when attached to the base unit;
the suction fixing being **characterised in that**:
the actuation mechanism comprises and is operated by a lever mounted on the top of the base unit;
the utensil locks the actuation mechanism by preventing access to the lever preventing the actuation mechanism from being operated to release the base unit from the surface until the utensil has been removed from the base unit; and wherein when the base unit is fixed to a flat horizontal surface and the utensil is mounted on the base unit by the engagement means the utensil is in an upright position.

2. A fixing as claimed in Claim 1, wherein the base unit is circular and the utensil (16) has a downwardly protruding annular wall (17) arranged to fit over the base unit (1).

3. A fixing as claimed in Claim 2, wherein the engagement means (5, 7, 21) on the base unit (1) engages with engagement means on the downwardly protruding annular wall (17) of the utensil (16).

4. A fixing as claimed in Claim 3, wherein the engagement means on the base unit are outwardly biased pins arranged to engage with apertures in the annular wall (17).

5. A fixing as claimed in Claim 3, wherein the engagement means on the base unit are one of keys or keyslots arranged to engage with corresponding keyslots or keys on the annular wall (17) of the utensil (16) when the utensil (16) is rotated in a first direction relative to the base unit (1).

## Patentansprüche

1. Saugbefestigung, die ein Utensil (16) in Form einer Schale oder Tasse und eine Basiseinheit (1) umfasst, die eingerichtet ist, an eine Oberfläche befestigt zu werden und sich lösbar mit dem Utensil (44) zu kuppeln, um das Utensil auf der Oberfläche in Position zu befestigen wobei die Basiseinheit umfasst:
Einen Saugnapf (3);
einen Betätigungsmechanismus (4), um den Saugnapf zu deformieren, um das Volumen zwischen dem Saugnapf und irgendeiner Oberfläche, auf die er platziert wird, zu erhöhen und außerdem anschließend die Saugwirkung unter dem Napf freizugeben;
ein Gehäuse (24), das am Saugnapf angebracht ist; und
ein Kupplungsmittel (45) am Gehäuse, das eingerichtet ist, sich mit dem Utensil lösbar zu kuppeln, das mit der Basiseinheit an die Oberfläche zu befestigen ist,
wobei:
Das Utensil eingerichtet ist, auf einer horizontalen Oberfläche in einer aufrechten Position freistehend zu sein, wenn es von der Basiseinheit getrennt ist, wobei die Schale oder Tasse von der Oberfläche abgewandt ist;
das Utensil Kupplungsmittel aufweist, die eingerichtet sind, mit dem Kupplungsmittel am Gehäuse zu kooperieren;
der Betätigungsmechanismus an der Basiseinheit betätigt werden kann, die Basiseinheit an eine Oberfläche zu befestigen, bevor das Utensil an die Basiseinheit angebracht wird; und
das Utensil eingerichtet ist, die Oberseite der Basiseinheit abzudecken, wenn es an die Basiseinheit angebracht ist;
wobei die Befestigung durch Saugwirkung **dadurch gekennzeichnet ist, dass**:
Der Betätigungsmechanismus einen an der Oberseite der Basiseinheit montierten Hebel umfasst und damit betätigt wird;
das Utensil durch Verhinderung von Zugang zum Hebel den Betätigungsmechanismus verriegelt, wodurch das Betätigen des Betätigungsmechanismus zur Freigabe der Basiseinheit von der Oberfläche verhindert wird, bis das Utensil von der Basiseinheit entfernt worden ist; und wobei, wenn die Basiseinheit an eine flache horizontale Oberfläche befestigt ist und das Utensil mittels des Kupplungsmittels an die Basiseinheit montiert ist, sich das Utensil in einer aufrechten Position befindet.

2. Befestigung nach Anspruch 1, wobei die Basiseinheit kreisförmig ist und das Utensil (16) eine nach unten hervorstehende ringförmige Wand (17) aufweist, die eingerichtet ist, über die Basiseinheit (1) zu passen.

3. Befestigung wie in Anspruch 2 beansprucht, wobei sich das Kupplungsmittel (5, 7, 21) an der Basiseinheit (1) mit dem Kupplungsmittel an der nach unten vorstehenden ringförmigen Wand (17) des Utensils (16) kuppelt.

4. Befestigung wie in Anspruch 3 beansprucht, wobei die Kupplungsmittel an der Basiseinheit nach außen vorgespannte Stifte sind, die eingerichtet sind, sich mit Öffnungen in der ringförmigen Wand (17) zu kuppeln.

5. Befestigung wie in Anspruch 3 beansprucht, wobei die Kupplungsmittel an der Basiseinheit eins von Keilen oder Keilnuten sind, die eingerichtet sind, sich mit entsprechenden Keilnuten oder Keilen an der ringförmigen Wand (17) des Utensils (16) zu kuppeln, wenn das Utensil (16) in einer ersten Richtung relativ zur Basiseinheit (1) gedreht wird.

## Revendications

1. Dispositif de fixation par aspiration comportant un ustensile (16) sous la forme d'un bol ou d'une tasse et une unité de base (1) agencés à des fins de fixation sur une surface et de mise en prise de manière libérable avec l'ustensile (44) pour fixer l'ustensile en place sur la surface, l'unité de base comportant :
un dispositif à ventouse (3) ;
un mécanisme d'actionnement (4) servant à déformer le dispositif à ventouse pour augmenter le volume entre le dispositif à ventouse et toute surface sur laquelle il est placé et servant également à libérer ultérieurement l'aspiration sous le dispositif à ventouse ;
un logement (24) attaché au dispositif à ventouse ; et
un moyen de mise en prise (45) sur le logement agencé à des fins de mise en prise de manière libérable avec l'ustensile devant être fixé sur la surface par l'unité de base,
dans lequel :
l'ustensile est agencé pour être autonome dans une position verticale sur une surface horizontale quand il est séparé de l'unité de base, le bol ou la tasse étant orienté à l'opposé de la surface ;
l'ustensile a un moyen de mise en prise agencé à des fins de coopération avec le moyen de mise en prise sur le logement ;
le mécanisme d'actionnement sur l'unité de base peut être actionné pour fixer l'unité de base sur une surface avant que l'ustensile ne soit attaché à l'unité de base ; et
l'ustensile est agencé pour couvrir la partie supérieure de l'unité de base quand il est attaché à l'unité de base ;
le dispositif de fixation par aspiration étant **caractérisé en ce que** :
le mécanisme d'actionnement comporte et est actionné par un levier monté sur la partie supérieure de l'unité de base ;
l'ustensile verrouille le mécanisme d'actionnement en empêchant tout accès au levier pour empêcher tout fonctionnement du mécanisme d'actionnement pour libérer l'unité de base de la surface jusqu'à ce que l'ustensile ait été retiré de l'unité de base ; et dans lequel, quand l'unité de base est fixée sur une surface horizontale plate et quand l'ustensile est monté sur l'unité de base par le moyen de mise en prise, l'ustensile est dans une position verticale.

2. Dispositif de fixation selon la revendication 1, dans lequel l'unité de base est circulaire et l'ustensile (16) a une paroi annulaire faisant saillie vers le bas (17) agencée pour s'installer sur l'unité de base (1).

3. Dispositif de fixation selon la revendication 2, dans lequel le moyen de mise en prise (5, 7, 21) sur l'unité de base (1) se met en prise avec le moyen de mise en prise sur la paroi annulaire faisant saillie vers le bas (17) de l'ustensile (16).

4. Dispositif de fixation selon la revendication 3, dans lequel les moyens de mise en prise sur l'unité de base sont des broches sollicitées vers l'extérieur agencées à des fins de mise en prise avec des ouvertures dans la paroi annulaire (17).

5. Dispositif de fixation selon la revendication 3, dans lequel les moyens de mise en prise sont l'une parmi des clavettes ou des rainures de clavette agencées à des fins de mise en prise avec des rainures de clavette ou des clavettes correspondantes sur la paroi annulaire (17) de l'ustensile (16) quand l'ustensile (16) est tourné dans une première direction par rapport à l'unité de base (1).
